(19) Europäisches Patentamt
European Patent Office
Office européen des brevets

(11) **EP 1 982 887 A1**

(12) **DEMANDE DE BREVET EUROPEEN**

(43) Date de publication:
**22.10.2008 Bulletin 2008/43**

(51) Int Cl.:
**B60T 8/1755** *(2006.01)*  **B60T 8/171** *(2006.01)*
**B60T 8/172** *(2006.01)*

(21) Numéro de dépôt: **08305088.0**

(22) Date de dépôt: **08.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **17.04.2007  FR 0754503**

(71) Demandeur: **PEUGEOT CITROËN AUTOMOBILES S.A.**
**78140 Vélizy Villacoublay (FR)**

(72) Inventeur: **Gay, François**
**37340 Criquebeuf sur Seine (FR)**

(54) **Procédé de contrôle de stabilité en boucle ouverte pour véhicule automobile**

(57) Procédé de contrôle dynamique de stabilité d'un véhicule automobile (1), caractérisé en ce qu'il utilise uniquement des informations caractérisant en temps réel la dynamique du véhicule, en particulier la vitesse longitudinale V du véhicule, l'accélération transversale $\gamma t$ au niveau du centre de gravité du véhicule et la vitesse de lacet $\Psi'$ autour de son centre de gravité dans le plan du sol, pour successivement estimer un survirage du véhicule en comportant le produit de la vitesse de lacet $\Psi'$ par la vitesse longitudinale V (76) à la valeur de l'accélération transversale (70), puis calculer un niveau de contraintes à appliquer sur le véhicule pour corriger ce survirage, par la détermination à priori d'une courbe de modulation du freinage Pf d'une ou plusieurs roues entraînant un couple de lacet sur le véhicule, ce freinage s'exerçant ensuite intégralement suivant la courbe prédéterminée.

EP 1 982 887 A1

## Description

La présente invention concerne un procédé et un dispositif de correction de trajectoire pour véhicule automobile, qui intervient en agissant sur les freins des roues pour corriger la trajectoire du véhicule dans le cas où elle s'écarte de celle souhaitée par le conducteur.

Les véhicules automobiles comportent généralement un dispositif de freinage indépendant sur chaque roue couplé à une unité de contrôle électronique. En utilisant différents capteurs fournissant des informations sur l'état du véhicule, on peut en exerçant un couple de freinage modulé indépendamment sur chaque roue réaliser en temps réel un contrôle de la vitesse de rotation de ces roues. Ce principe est utilisé pour des fonctions comme l'antiblocage des roues ou ABS (Anti-lock Braking System), et l'antipatinage des roues motrices ou ASR (Anti-Slip Regulation).

De plus, le freinage indépendant de chaque roue permet en utilisant la réaction de l'effort du sol sur le pneu lors du freinage de la roue correspondante, d'appliquer au véhicule un couple de rotation dans le plan du sol autour de son centre de gravité appelé couple de lacet. Ce couple de lacet est utilisé par des systèmes de contrôle dynamique de stabilité ou ESP (Electronic Stability program), pour faire pivoter le véhicule et ainsi intervenir sur sa trajectoire.

En ajustant le freinage de manière adaptée sur chaque roue, on peut ainsi modifier l'orientation du véhicule quand l'unité de contrôle traitant les signaux fournis par les capteurs, détermine que la trajectoire du véhicule diffère de celle demandée par le conducteur.

C'est le cas notamment quand les pneus arrivent à la limite d'adhérence sur le sol. Dans le cas d'une chaussée glissante ou d'un effort trop important d'accélération ou de freinage, les trains avant ou arrière peuvent glisser latéralement entraînant le véhicule vers l'extérieur de la trajectoire demandée dans un sous virage, ou vers l'intérieur dans un survirage. Le véhicule tourne alors dans le plan du sol autour de son centre de gravité et forme un angle de lacet par rapport au vecteur vitesse instantané de sa trajectoire, appelé aussi angle de dérive.

Il est important dans ce cas de réagir immédiatement avant que l'angle de dérive n'augmente et ne puisse plus être rattrapé, pour appliquer un effort de freinage sur au moins une des roues et exercer par réaction de la route, un couple de lacet sur le véhicule qui le stabilise et peut le faire pivoter pour corriger sa trajectoire.

Un procédé de contrôle de ce type est décrit dans le document FR-A1-2845656. Il présente un contrôle dynamique de stabilité du véhicule, comprenant l'acquisition de données au moyen de différents capteurs pour réaliser une évaluation de l'écart entre la trajectoire réelle du véhicule et la trajectoire souhaitée par le conducteur, afin de calculer une correction à apporter à la trajectoire du véhicule par une action sur les freins.

En particulier, l'erreur instantanée par rapport à la trajectoire souhaitée est calculée à partir des cinq grandeurs suivantes, la vitesse du centre de gravité du véhicule, l'angle de dérive, la variation dans le temps de l'angle de lacet, l'accélération latérale et l'angle de braquage du volant. Le procédé met donc en oeuvre un moyen permettant de déterminer l'angle de braquage du volant.

Un inconvénient principal de ce procédé est qu'il nécessite de nombreux capteurs, en particulier un capteur d'angle volant, ce qui entraîne une complexité et un coût élevé ainsi que des risques de défaillances plus importants. De plus, l'angle de braquage du volant ne représente pas directement la dynamique du véhicule, l'information délivrée subissant un décalage dans le temps par rapport à la dynamique réelle.

L'invention a notamment pour but d'éviter ces inconvénients de la technique antérieure et d'apporter à la réalisation d'un procédé de contrôle dynamique de stabilité d'un véhicule, une méthode d'évaluation de l'écart de trajectoire puis de correction de cette trajectoire, simple et efficace, et nécessitant un nombre réduit de capteurs.

Elle propose à cet effet un procédé de contrôle dynamique de stabilité d'un véhicule, notamment un véhicule automobile, comprenant un train de roues avant et un train de roues arrière, chaque roue comportant un dispositif de freinage commandé indépendamment par une unité de contrôle électronique, des capteurs fournissant des informations représentant la dynamique du véhicule à l'unité de contrôle électronique pour délivrer un signal d'actionnement des freins destiné à corriger la trajectoire du véhicule dans le cas d'un survirage, caractérisé en ce que le procédé de contrôle de stabilité exploite uniquement des informations caractérisant en temps réel la dynamique du véhicule, en particulier la vitesse longitudinale du véhicule, l'accélération transversale au niveau du centre de gravité du véhicule et la vitesse de lacet autour de son centre de gravité dans le plan du sol, et en ce qu'il consiste successivement :

- à multiplier la vitesse de lacet par la vitesse longitudinale ;
- à estimer un survirage du véhicule en comparant le produit de la vitesse de lacet par la vitesse longitudinale à la valeur de l'accélération transversale ; et
- à calculer un niveau de contraintes à appliquer sur le véhicule pour corriger ce survirage, par la détermination a priori d'une courbe de modulation du freinage d'une ou plusieurs roues entraînant un couple de lacet sur le véhicule, ce freinage s'exerçant ensuite intégralement suivant la courbe prédéterminée.

Une caractéristique essentielle du procédé de contrôle de stabilité suivant l'invention est qu'il nécessite peu de capteurs délivrant des informations sur la dynamique du véhicule, ce qui permet de simplifier la réalisation et de réduire les coûts.

De préférence, l'unité de contrôle électronique utilise les mesures de l'accélération transversale et de la vitesse de lacet, ainsi que des donnés géométriques du véhicule mises en mémoire, pour estimer des accélérations transversales avant et arrière qui s'appliquent au niveau des trains de roues respectivement avant et arrière, et par mesure de l'écart entre ces valeurs déterminer le début d'un survirage à corriger.

Suivant une caractéristique de l'invention, l'unité de contrôle électronique calcul l'angle de dérive du train arrière défini par l'angle entre le vecteur vitesse instantané au centre du train arrière et l'axe longitudinal du véhicule, pour déterminer le niveau des contraintes à appliquer sur le véhicule par le freinage, afin d'exercer un couple de lacet.

Le niveau des contraintes à appliquer sur le véhicule par le freinage pour exercer un couple de lacet peut permettre à la vitesse de lacet de redescendre en dessous d'une valeur théorique correspondant à la vitesse de lacet sur cette même trajectoire en l'absence de survirage.

L'invention comprend aussi un dispositif de contrôle dynamique de stabilité d'un véhicule, embarqué sur le véhicule, pour la mise en oeuvre du procédé présenté ci-dessus, comportant une unité de contrôle électronique, des capteurs caractérisant en temps réel la dynamique du véhicule et une mémoire pour stocker les informations reçues des capteurs.

Avantageusement, les capteurs font partie d'un même ensemble disposé sensiblement au centre de gravité du véhicule.

L'invention sera mieux comprise et d'autres caractéristiques et avantages apparaîtront plus clairement à la lecture de la description ci-après donnée à titre d'exemple en référence aux dessins annexés dans lesquels :

- la figure 1 est un schéma d'un véhicule équipé suivant l'art antérieur ;
- la figure 2 est un schéma présentant la trajectoire d'un véhicule effectuant un survirage ;
- la figure 3 est un diagramme fonctionnel d'un procédé de contrôle de stabilité suivant l'art antérieur;
- la figure 4 est schéma présentant le fonctionnement d'un procédé de contrôle de stabilité suivant l'art antérieur ;
- la figure 5 est un graphique présentant le principe d'estimation du survirage suivant l'invention;
- la figure 6 est un schéma présentant les informations dynamiques ;
- la figure 7 est un schéma présentant des valeurs de dérive et d'accélération transversale ;
- la figure 8 est un schéma d'un véhicule équipé d'un dispositif pour la mise en oeuvre du procédé suivant l'invention ;
- la figure 9 est un schéma présentant le fonctionnement du procédé de contrôle selon l'invention ; et
- la figure 10 est un schéma présentant des mesures lors d'un fonctionnement du procédé de contrôle selon l'invention.

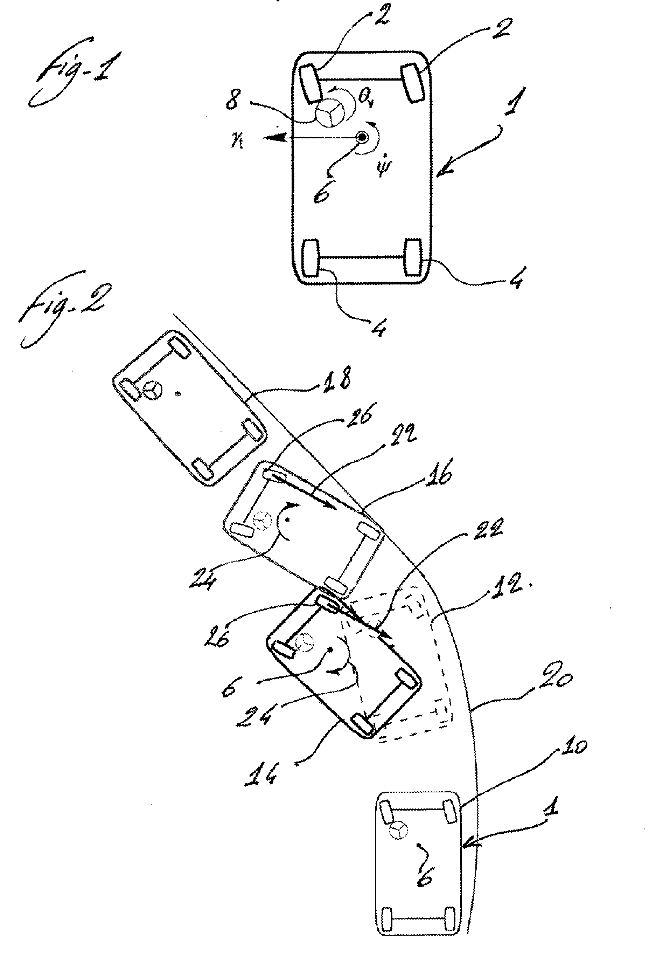

La figure 1 représente un véhicule 1 comportant un train avant avec des roues avant 2, un train arrière avec des roues arrière 4, et un volant de direction 8 qui tourne suivant un angle de braquage θv pour diriger les roues avant. Le centre de gravité 6 du véhicule est soumis dans une courbe à une accélération transversale γt, pendant que le véhicule tourne autour de son centre de gravité dans le plan du sol avec une vitesse de lacet ψ'.

La figure 2 décrit, en vue de dessus, la progression du véhicule 1 dans une courbe en cas de survirage, le trait 20 représente la trajectoire que souhaite suivre le conducteur. La position 10 du véhicule le présente en début de courbe, roues avant braquées. La position suivante 12 est celle à atteindre, mais le véhicule suite à un problème d'adhérence survire en prenant un angle de lacet trop important. Il se tourne ensuite vers l'intérieur du virage pour venir dans la position 14.

Le survirage peut provenir de plusieurs raisons, notamment une perte d'adhérence du train arrière suite à une levée brutale de la pédale de gaz qui entraîne un transfert dynamique des masses vers l'avant du véhicule.

Dans ce cas, le procédé de contrôle de stabilité intervient et applique sur la roue avant droite 26 un couple de freinage qui entraîne sur le véhicule au niveau de cette roue une force de freinage 22 vers l'arrière. Le véhicule subit alors un couple de rotation 24 autour de son centre de gravité 6, qui le redresse pour le conduire vers les positions 16 puis 18 suivant sa trajectoire prévue, le freinage cessant alors.

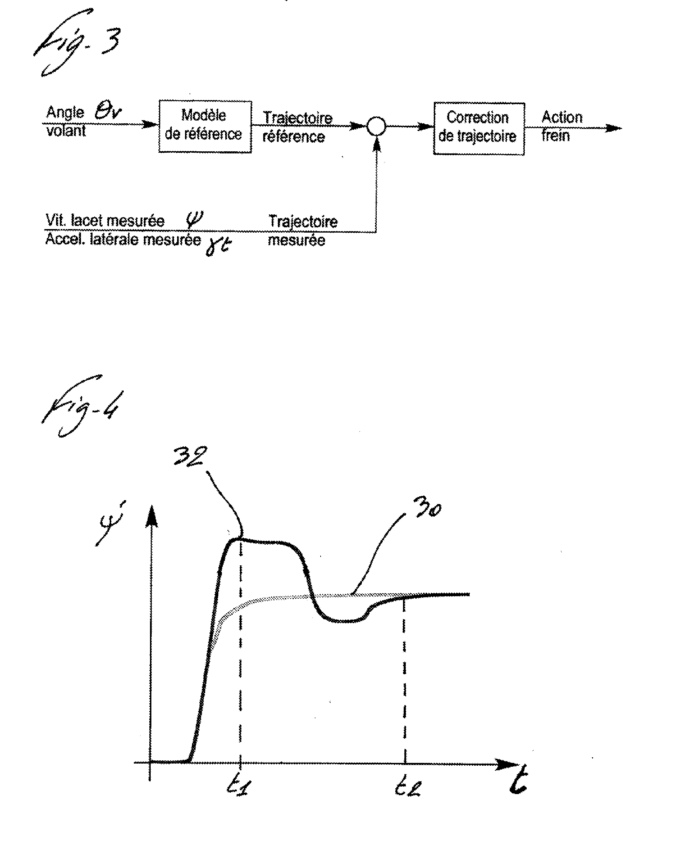

Le procédé de contrôle de stabilité suivant l'art antérieur, présenté figure 3, exploite les informations délivrées par un capteur d'angle de braquage du volant θv pour calculer, à partir de modèles de référence contenant des caractéristiques du véhicule, la trajectoire de référence qui est celle demandée par le conducteur.

Par ailleurs, le procédé exploite les informations délivrées par des capteurs qui mesurent l'accélération latérale γt ainsi que la vitesse de lacet ψ', ce qui lui permet d'établir la trajectoire mesurée ou trajectoire réelle du véhicule. Par comparaison, il en déduit un écart de trajectoire servant à établir une valeur de correction de la trajectoire, et calcule une courbe de modulation du freinage pour redresser le véhicule.

La figure 4 est un graphique, avec le temps pour abscisse, qui représente en ordonnée la vitesse de lacet ψ' du véhicule. La courbe 30 représente une vitesse de lacet théorique établie à partir de la trajectoire de référence qui est calculée en fonction de l'angle de braquage du volant θv, la courbe 32 représente la vitesse de lacet ψ' mesurée liée à la trajectoire réelle.

Après le début du braquage, la courbe de lacet ψ' réelle 32 passe nettement au dessus de la courbe de référence 30 ce qui traduit un survirage du véhicule. L'unité de contrôle du procédé, au temps t1, commande un freinage d'une roue extérieure. La vitesse de lacet ψ' réelle 32 diminue alors pour devenir dans ce cas inférieure à la vitesse de référence 30, ce qui arrête le survirage. En fonction de la durée et de l'amplitude du passage de la vitesse de lacet ψ' réelle 32 sous la vitesse de référence 30, et après avoir stoppé le dérapage, on rapproche ensuite le véhicule de sa trajectoire initiale en le faisant pivoter vers l'extérieur. Au temps t2, le freinage cesse d'agir, puis la trajectoire estimée rejoint la trajectoire de référence 30.

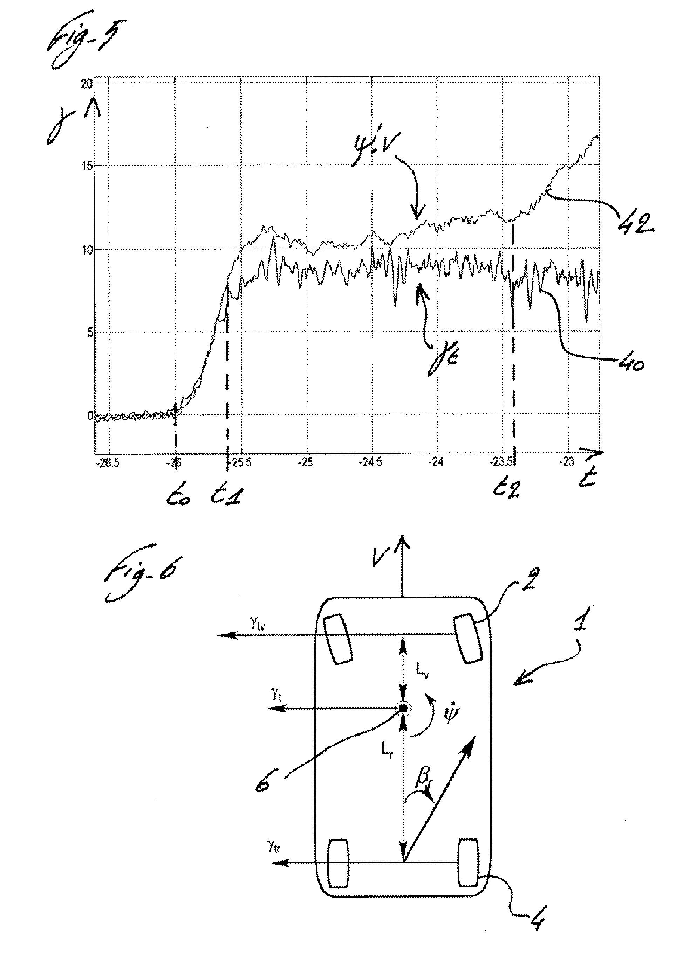

La figure 5 est un graphique, avec le temps pour abscisse, qui représente la mesure, pendant un survirage, de l'accélération transversale γt du véhicule (courbe 40), comparée à la vitesse de lacet ψ' (courbe 42), multipliée par la vitesse longitudinale V du véhicule et par une constante. La constante est déterminée pour pouvoir superposer les courbes 40, 42 en l'absence de survirage. On obtient pour cette courbe 42 une valeur homogène à une accélération,

Au temps t0, le conducteur braque le volant du véhicule, l'accélération transversale γt du véhicule augmente en même temps que la vitesse de lacet ψ'. Quand l'accélération latérale du véhicule s'approche au temps t1 des 10m/s$^2$, valeur proche de la limite d'adhérence des pneus, le train arrière commence à glisser latéralement et le véhicule survire. Puis le survirage continue avec une vitesse de lacet ψ' sensiblement constante, le décalage par rapport à l'accélération transversale γt restant constant.

Au temps t2, on constate une forte accélération de la vitesse de lacet ψ' alors que l'accélération transversale γt a tendance à décroître légèrement, traduisant une diminution de l'adhérence. Cette évolution rapide conduit à une perte de contrôle du véhicule.

On constate que l'écart entre les courbes 40 et 42 représente une mesure du survirage du véhicule. Le procédé de contrôle de stabilité suivant l'invention va utiliser l'accélération transversale γt comme valeur de référence pour établir la trajectoire souhaitée, et la vitesse de lacet ψ' comme valeur principale de détection et de mesure du survirage.

Le produit de la vitesse longitudinale V multiplié par la vitesse de lacet ψ', homogène à une accélération, est comparé à l'accélération transversale γt mesurée qui dépend du niveau d'adhérence transversal réel. On constate que la vitesse de lacet ψ' du véhicule est trop forte, la différence constituant une valeur représentant le survirage du véhicule. C'est cette différence qui est utilisée par le procédé de contrôle suivant l'invention.

La figure 6 présente la localisation de différentes grandeurs prises en compte par le procédé suivant l'invention, sur un véhicule en vue de dessus : la vitesse longitudinale V; les empattements Lv et Lr, distances longitudinales entre le centre de gravité 6 et l'axe des trains avant et arrière ; les accélérations transversales γtv et γtr estimées au niveau des trains avant et arrière ; et l'angle βr de dérive du train arrière estimé entre le vecteur vitesse instantané au centre du train arrière et l'axe longitudinal du véhicule.

On peut calculer les accélérations transversales avant γtv et arrière γtr à partir de la dérivé de la vitesse de lacet ψ'' et de l'accélération transversale γt, en utilisant les formules suivantes :

$$\gamma tv = \gamma t + Lv\psi''$$

$$\gamma tr = \gamma t - Lr\psi''$$

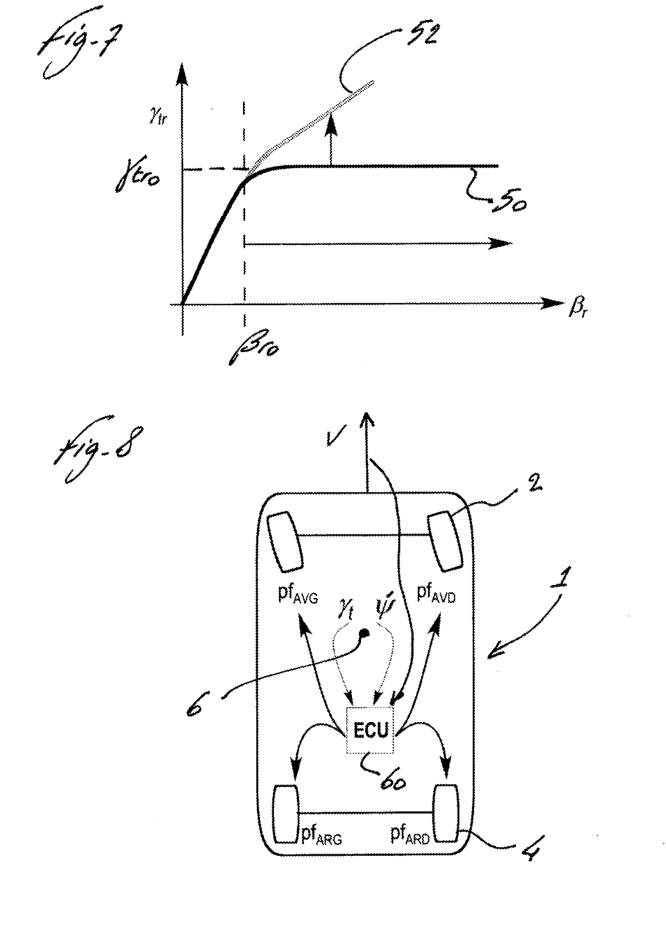

Sur la figure 7, l'axe des abscisses représente l'angle de dérive βr du train arrière, et l'axe des ordonnés l'accélération transversale arrière γtr. Pour la première partie de la courbe 50, l'angle de dérive arrière augmente linéairement avec l'accélération transversale arrière γtr, le système est stable. A partir d'un angle de dérive arrière βr0, le train arrière est en limite d'adhérence, il est saturé et ne peut plus permettre d'accélération transversale supérieure au seuil γtr0.

La courbe 52 représente une courbe cible de stabilisation du véhicule. Pour contrôler le véhicule, il serait nécessaire d'augmenter l'accélération transversale arrière γtr pour venir sur la courbe cible 52. En agissant sur le frein d'une roue extérieure, on diminue la vitesse de lacet ψ', et suivant la formule vue ci-dessus γtr = γt - Lrψ', on remonte le niveau de l'accélération transversale arrière γtr en créant un couple de rotation du véhicule dans le plan du sol, ce qui est appelé aussi émulation du train arrière.

La courbe cible 52 est gardée en mémoire dans le dispositif de contrôle de stabilité. Le procédé selon l'invention permet, à partir d'une estimation de l'angle de dérive arrière βr, de déterminer a priori le niveau d'émulation à atteindre pour le train arrière qui donnera la correction de trajectoire voulue.

La figure 8 présente un dispositif de contrôle de stabilité embarqué dans un véhicule et mis en oeuvre par le procédé selon l'invention. Le dispositif comprend une unité de contrôle électronique ou ECU 60, qui reçoit des informations d'un capteur mesurant la vitesse de lacet ψ', d'un capteur mesurant la vitesse du véhicule V, et d'un capteur mesurant l'accélération transversale γt. Les capteurs de mesure de la vitesse de lacet ψ' et d'accélération transversale γt peuvent être regroupés dans un seul ensemble réalisant les deux fonctions. Il est situé de préférence, mais pas nécessairement, près du centre de gravité 6. L'unité de contrôle électronique 60 commande des pressions de frein Pf à appliquer sur les freins de chaque roue.

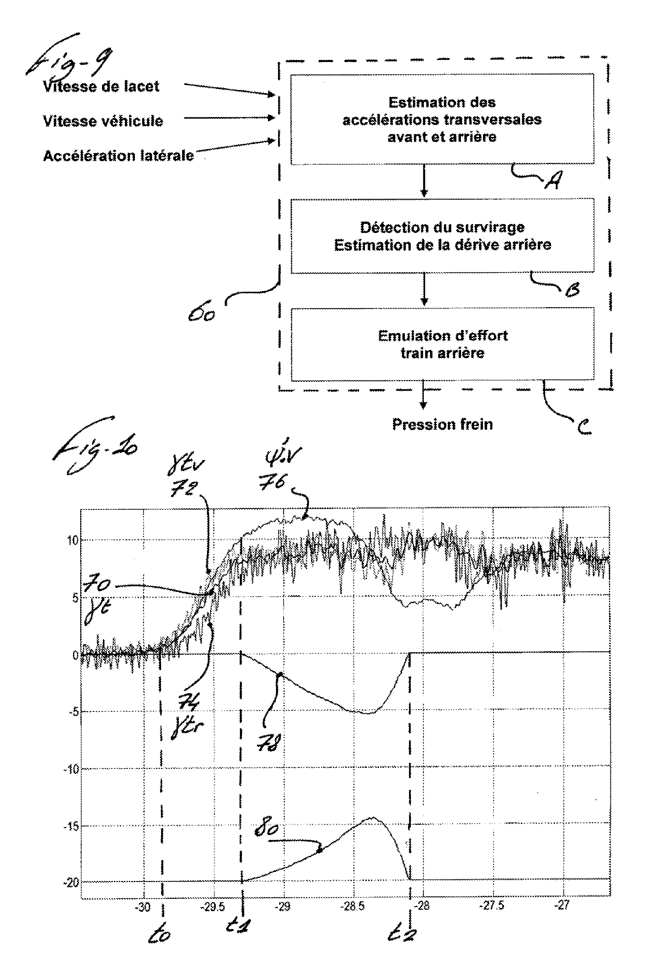

Les figures 9 et 10 présentent un fonctionnement du procédé de contrôle de stabilité selon l'invention. Au temps t0, le conducteur braque le volant pour commencer un virage. Du temps t0 au temps t1, le train avant directeur réagit en premier et la courbe 72 de l'accélération transversale avant γtv augmente de manière plus importante que la courbe 74 de l'accélération transversale arrière γtr, le train arrière suivant avec un décalage dans le temps.

Dans cette première phase, le véhicule prend ses appuis sur le sol et on constate en fin de phase une légère dérive du train arrière, la courbe 76 liée à la vitesse de lacet ψ' mesurée étant légèrement supérieure à la courbe 70 de l'accélération transversale γt. Cette phase est normale pour permettre au véhicule de virer. La différence des estimations des accélérations transversales avant γtv (courbe 72), et arrière γtr (courbe 74) étant surveillée dans l'opération A du graphe de la figure 9. Elle représente une dérive βr du train arrière qui est nécessaire.

De plus, pour des petits survirages limités dans le temps, le procédé de contrôle de stabilité ne doit pas intervenir pour éviter d'envoyer des signaux trop fréquents, ce qui pourrait créer des confusions.

Au temps t1, l'écart entre les accélérations transversales avant γtv et arrière γtr diminue fortement, le train arrière arrive en limite d'adhérence, on passe à l'opération B de détection d'un survirage et d'estimation de correction de dérive arrière βr à apporter qui est représentée par la courbe 78. Parallèlement, la courbe 76 représentant la vitesse de lacet ψ' s'écarte nettement de la courbe 70.

L'unité de contrôle 60 détermine alors à l'aide de données en mémoire du type de la courbe cible 52 présentée figure 7, le niveau d'émulation qu'il faut apporter au train arrière, ce qui est réalisé dans l'opération C. Ce niveau d'émulation se traduit par une pression de frein Pr représentée courbe 80, sur des roues extérieures pour provoquer un couple de lacet.

On observe alors pendant le freinage, une baisse de la courbe 76 représentant la vitesse de lacet ψ' qui passe en dessous de la courbe 70 d'accélération transversale γt, jusqu'au moment t2 où le contrôle cesse d'agir. La courbe 76 vient ensuite rejoindre la courbe 70, et le survirage prend fin.

Le niveau global d'émulation du train arrière à réaliser est calculé au temps t1 par la prédétermination à priori d'une courbe de modulation du freinage d'une roue extérieure, cette courbe de freinage est ensuite appliquée intégralement sans modification, en n'utilisant pas de boucle de régulation fermée. Le niveau d'émulation a été calculé pour délivrer une énergie suffisante, et donc provoquer un couple de lacet suffisant pour faire passer la courbe 76 liée à la vitesse de lacet ψ' en dessous de la courbe 70 d'accélération transversale γt.

Par ce passage sous la courbe 70, on réalise un redressement du véhicule vers l'extérieur du virage et on compense au moins partiellement la déviation de trajectoire en rapprochant le véhicule de sa trajectoire désirée 20.

On notera que le procédé de contrôle de stabilité suivant l'invention permet de se passer d'un capteur de braquage du volant θv pour déterminer la courbe de trajectoire désirée, ce qui peut permettre de réaliser un contrôle de meilleur qualité. En effet, l'angle de braquage du volant θv donne une information très en avance, avant que le véhicule ne réagisse effectivement, alors que les capteurs d'accélération latérale γt et de vitesse de lacet ψ' donnent une information en temps réel qui est mieux représentative de la dynamique du véhicule à un moment donné, et donc de sa trajectoire.

D'autre part, le décalage dans le temps des informations venant d'un capteur de braquage du volant θv peut rendre les réactions du procédé de contrôle de stabilité perceptibles par le conducteur, ce qui est en général désagréable car il peut avoir l'impression de ne pas être maître de son véhicule.

## Revendications

1.  Procédé de contrôle dynamique de stabilité d'un véhicule automobile (1) comprenant un train de roues avant (2) et un train de roues arrière (4), chaque roue comportant un dispositif de freinage commandé indépendamment par une unité de contrôle électronique (60), des capteurs fournissant des informations représentant la dynamique du véhicule à l'unité de contrôle électronique (60) pour délivrer un signal d'actionnement des freins destiné à corriger la trajectoire du véhicule dans le cas d'un survirage, **caractérisé en ce que** le procédé de contrôle de stabilité utilise uniquement des informations caractérisant en temps réel la dynamique du véhicule, en particulier la vitesse longitudinale V du véhicule, l'accélération transversale γt au niveau du centre de gravité du véhicule, considérée comme la valeur de référence pour établir la trajectoire souhaitée, et la vitesse de lacet ψ' autour de son centre de gravité dans le plan du sol, considérée comme la valeur principale de détection et de mesure de survirage, et **en ce qu'**il consiste successivement :

    - à multiplier la vitesse de lacet ψ' par la vitesse longitudinale V (76) ;
    - à estimer un survirage du véhicule en comparant le produit de la vitesse de lacet ψ' par la vitesse longitudinale V (76) à la valeur de l'accélération transversale γt ; et
    - à calculer un niveau de contraintes à appliquer sur le véhicule pour corriger ce survirage, par la détermination a priori d'une courbe de modulation du freinage Pf d'une ou plusieurs roues entraînant un couple de lacet sur le véhicule, ce freinage s'exerçant ensuite intégralement suivant la courbe prédéterminée.

2.  Procédé de contrôle dynamique de stabilité suivant la revendication 1, **caractérisé en ce que** l'unité de contrôle électronique (60) utilise les mesures de l'accélération transversale γt et de la vitesse de lacet ψ', ainsi que des données géométriques du véhicule mises en mémoire, pour estimer des accélérations transversales avant $\gamma tv$ et arrière $\gamma tr$ qui s'appliquent au niveau des trains de roues avant et arrière, et par mesure de l'écart entre ces valeurs déterminer le début d'un survirage à corriger.

3. Procédé de contrôle dynamique de stabilité suivant la revendication 1, **caractérisé en ce que** l'unité de contrôle électronique (60) calcule l'angle de dérive du train arrière $\beta r$ défini par l'angle entre le vecteur vitesse instantané au centre du train arrière et l'axe longitudinal du véhicule, pour déterminer le niveau des contraintes à appliquer sur le véhicule par le freinage Pf afin d'exercer un couple de lacet.

4. Procédé de contrôle dynamique de stabilité suivant la revendication 3, **caractérisé en ce que** le niveau des contraintes à appliquer sur le véhicule par le freinage Pf pour exercer un couple de lacet, permet à la vitesse de lacet $\psi'$ de redescendre en dessous d'une valeur théorique correspondant à la vitesse de lacet sur cette même trajectoire en l'absence de survirage.

5. Dispositif de contrôle dynamique de stabilité d'un véhicule, embarqué sur le véhicule, notamment un véhicule automobile, pour la mise en oeuvre du procédé selon l'une quelconque des revendications précédentes, **caractérisé en ce qu'**il comporte une unité de contrôle électronique (60), des capteurs caractérisant en temps réel la dynamique du véhicule et une mémoire pour stocker les informations reçues des capteurs.

6. Dispositif selon la revendication 5, **caractérisé en ce que** les capteurs font partie d'un même ensemble disposé sensiblement au centre de gravité du véhicule.

Fig-1

Fig-2

*Fig. 3*

Angle $\theta v$ volant → | Modèle de référence | → Trajectoire référence → ○ → | Correction de trajectoire | → Action frein

Vit. lacet mesurée $\psi$ / Accel. latérale mesurée $\gamma t$ → Trajectoire mesurée

*Fig-4*

*Fig-5*

*Fig-6*

*Fig-7*

*Fig-8*

Fig-9

Vitesse de lacet

Vitesse véhicule

Accélération latérale

Estimation des
accélérations transversales
avant et arrière

*A*

Détection du survirage
Estimation de la dérive arrière

*B*

60

Emulation d'effort
train arrière

Pression frein

*C*

Fig-10

$\gamma_{tv}$
72

$\dot{\psi}.v$
76

70
$\gamma_t$

74
$\gamma_{tr}$

78

80

-30        -29.5        -29        -28.5        -28        -27.5        -27

$t_0$        $t_1$        $t_2$

**Office européen**

**des brevets**

**RAPPORT DE RECHERCHE EUROPEENNE**

Numéro de la demande

EP 08 30 5088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 495 931 A (TOYOTA MOTOR CO LTD [JP]) 12 janvier 2005 (2005-01-12) * colonne 9, ligne 53 - colonne 11, ligne 18; figures 1,4A * | 1,4,5 | INV. B60T8/1755 B60T8/171 B60T8/172 |
| Y | | 2,3,6 | |
| Y | EP 1 538 043 A (ADVICS CO LTD [JP]; DAIHATSU MOTOR CO LTD [JP]) 8 juin 2005 (2005-06-08) * colonne 13, ligne 3 - colonne 14, ligne 43; figures 1,3 * | 1,4,5 | |
| Y | DE 102 47 994 A1 (BOSCH GMBH ROBERT [DE]) 29 avril 2004 (2004-04-29) * page 4, alinéa 39 - page 5, alinéa 46 * | 1,4,5 | |
| Y | DE 198 32 484 A1 (ITT MFG ENTERPRISES INC [US]) 12 août 1999 (1999-08-12) * colonne 7, ligne 14 - colonne 8, ligne 27 * | 2 | |
| Y | EP 1 000 838 A (DAIMLER CHRYSLER AG [DE]) 17 mai 2000 (2000-05-17) * page 4, alinéa 23 - page 5, alinéa 33; figures 2,3 * | 3 | **DOMAINES TECHNIQUES RECHERCHES (IPC)** B60T |
| Y | DE 10 2005 060173 A1 (CONTINENTAL TEVES AG & CO OHG [DE]) 13 juillet 2006 (2006-07-13) * page 6, alinéa 56 - page 7, alinéa 58 * | 6 | |
| A | EP 0 770 529 A (TOYOTA MOTOR CO LTD [JP]) 2 mai 1997 (1997-05-02) * page 4, ligne 37 - ligne 45 * | 1,3 | |
| A | US 6 895 318 B1 (BARTON ANDREW DENNIS [GB] ET AL) 17 mai 2005 (2005-05-17) * colonne 4, ligne 58 - colonne 5, ligne 14 * | 1,3 | |

Le présent rapport a été établi pour toutes les revendications

| Lieu de la recherche | Date d'achèvement de la recherche | Examinateur |
|---|---|---|
| Munich | 25 juillet 2008 | Marx, Winfried |

**ANNEXE AU RAPPORT DE RECHERCHE EUROPEENNE
RELATIF A LA DEMANDE DE BREVET EUROPEEN NO.**

EP 08 30 5088

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2008

| Document brevet cité au rapport de recherche | | Date de publication | Membre(s) de la famille de brevet(s) | | Date de publication |
|---|---|---|---|---|---|
| EP 1495931 | A | 12-01-2005 | CN | 1576124 A | 09-02-2005 |
| | | | JP | 4084248 B2 | 30-04-2008 |
| | | | JP | 2005028919 A | 03-02-2005 |
| | | | KR | 20050006035 A | 15-01-2005 |
| | | | KR | 20060083927 A | 21-07-2006 |
| | | | US | 2005029754 A1 | 10-02-2005 |
| EP 1538043 | A | 08-06-2005 | WO | 2004024522 A1 | 25-03-2004 |
| | | | JP | 2004098849 A | 02-04-2004 |
| | | | US | 2005251316 A1 | 10-11-2005 |
| DE 10247994 | A1 | 29-04-2004 | AUCUN | | |
| DE 19832484 | A1 | 12-08-1999 | AUCUN | | |
| EP 1000838 | A | 17-05-2000 | DE | 19851978 A1 | 25-05-2000 |
| | | | ES | 2242337 T3 | 01-11-2005 |
| | | | JP | 3149025 B2 | 26-03-2001 |
| | | | JP | 2000185658 A | 04-07-2000 |
| | | | US | 6449542 B1 | 10-09-2002 |
| DE 102005060173 | A1 | 13-07-2006 | AUCUN | | |
| EP 0770529 | A | 02-05-1997 | DE | 69617876 D1 | 24-01-2002 |
| | | | DE | 69617876 T2 | 29-08-2002 |
| | | | JP | 3008833 B2 | 14-02-2000 |
| | | | JP | 9118212 A | 06-05-1997 |
| | | | US | 5676433 A | 14-10-1997 |
| US 6895318 | B1 | 17-05-2005 | AUCUN | | |

EPO FORM P0460

Pour tout renseignement concernant cette annexe : voir Journal Officiel de l'Office européen des brevets, No.12/82

**EP 1 982 887 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2845656 A1